# EUROPÄISCHE PATENTSCHRIFT

(11) **EP 4 375 587 B1**
(45) Veröffentlichungstag und Bekanntmachung des Hinweises auf die Patenterteilung: **26.08.2026**
(21) Anmeldenummer: 23210027.1
(22) Anmeldetag: 15.11.2023
(51) Int. Cl.: F24S 25/613, F24S 25/60, H02S 20/23, H02S 20/30, F24S 25/63

(54) **SOLARMODULBEFESTIGUNGSSYSTEM MIT UNTERSCHIEDLICHEN WINKELN**
SOLAR MODULE FIXING SYSTEM WITH DIFFERENT ANGLES
SYSTÈME DE FIXATION DE MODULE SOLAIRE À ANGLES DIFFÉRENTS

(30) Priorität: 24.11.2022 DE 102022131179
(43) Veröffentlichungstag der Anmeldung: 29.05.2024
(73) Patentinhaber: Renusol Europe GmbH, 51149 Köln (DE)
(72) Erfinder: Roßbach, Nils, 51103 Köln (DE); Painter, Darren, Farnham, GU9 0FJ (GB)
(74) Vertreter: Patentanwälte Bauer Vorberg Kayser

(56) Entgegenhaltungen:
- EP-A1- 2 527 762
- EP-A1- 4 075 077
- EP-A1- 4 092 351
- EP-A2- 1 348 915
- DE-U1- 202021 103 070
- US-B1- 8 839 575

## Beschreibung

Die Erfindung betrifft ein Solarmodulbefestigungssystem aufweisend
- einen auf einem Untergrund, insbesondere an einem Dach befestigbaren Grundträger mit einer Grundplatte, auf der zumindest zwei einander gegenüberliegende und sich parallel zueinander erstreckende Grundträger-Haltewände angeordnet sind, wobei die Grundträger-Haltewände in ihren aufeinander zu gerichteten Innenflächen jeweils zumindest eine Aufnahmenut aufweisen, die einander gegenüberliegend und parallel verlaufend angeordnet sind und gemeinsam mit der Grundplatte eine Bügelträgeraufnahme ausbilden,
- einen Bügelträger mit einem Haltearm, der endseitig in einen Befestigungsbereich übergeht, der mit dem Grundträger lösbar verbindbar ist.

Ein solches Solarmodulbefestigungssystem ist beispielsweise aus der EP 2 828 588 B1 bekannt und dient der Befestigung von Solarmodulen auf einem Dach eines Gebäudes. Hierzu wird der Grundträger an einer Dachkonstruktion, beispielsweise an Dachsparren, befestigt. Der an dem Grundträger lösbar befestigte Bügelträger weist einen Befestigungsbereich mit einem mehrere Arme aufweisenden Bügelabschnitt auf, wobei jeder Arm des Bügelabschnitts mit dem Grundträger lösbar verbunden ist. Die beiden Arme werden zu diesem Zweck jeweils in eine Aufnahmenut des Grundträgers eingeführt. Ähnliche Konstruktionen zeigen die Druckschriften EP 4 092 351 A1, EP 2 527 762 A1, EP4 075 077 A1, DE 20 2021 103 070 U1 und US 8,839,575 B1.

Aus der Offenlegungsschrift EP 2 194 335 A1 ist ein Solarmodulhalter bekannt, der einen lösbar an dem Grundträger befestigbaren Bügelträger aufweist, wobei der Bügelträger einen in zwei Arme übergehenden Verzweigungsbereich aufweist, wobei die Arme einen Abschnitt des Grundträgers zur Befestigung zwischen sich aufnehmen. Aus der Offenlegungsschrift EP 2 093 524 A1 ist des Weiteren ein Solarmodulhalter bekannt, der mit einem freien Endabschnitt in eine Aufnahmenut eines Grundhalters eingreift und sich verhakt.

Die bekannten Lösungen sehen somit vor, dass entweder zwei Aufnahmenuten für die freien Enden der Arme vorgesehen und genutzt werden müssen oder dass ein Abschnitt des Grundträgers zwischen die Arme gebracht werden muss. Dies hat zum Einen fertigungstechnische Nachteile, zum Anderen besteht die Gefahr, dass sich die nach oben offenen Aufnahmenuten aufgrund ihres geringen Querschnitts schnell beispielsweise mit Schmutz zusetzen, was ein Einführen der freien Enden der Arme erschwert.

Weiterhin sind derartige Systeme hinsichtlich ihrer Einsatzmöglichkeiten beschränkt. Insbesondere kann es notwendig sein, dass der der Abstand und/oder die Ausrichtung der Solarmodule zum Untergrund aufgrund unterschiedlicher Anforderungen angepasst werden muss. Auch dies ist mit den beschriebenen Solarmodulbefestigungssystemen kaum möglich.

Der Erfindung liegt die Aufgabe zugrunde, eine alternative Ausführungsform eines solchen Solarmodulbefestigungssystems anzugeben. Dieses soll eine einfache und robuste Konstruktion aufweisen, kostengünstig herzustellen und insbesondere auch schnell und einfach zu montieren sein. Insbesondere soll das Solarmodulbefestigungssystem eine möglichst einfache Montage auch bei unterschiedlichen Gegebenheiten vor Ort ermöglichen soll.

Diese Aufgabe wird erfindungsgemäß durch einen Solarmodulbefestigungssystem mit den Merkmalen des Anspruchs 1 gelöst.

Demnach weist das Solarmodulbefestigungssystem einen gattungsgemäßen Grundträger mit einer Bügelträgeraufnahme und einen gattungsgemäßen Bügelträger auf, wobei
- der Bereich zwischen den Grundträger-Haltewände einen Freiraum ausbildet,
- der Befestigungsbereich des Bügelträgers einen Befestigungsfuß aufweist, der im befestigen Zustand den Innenflächen der Grundträger-Haltewände zugewandte Außenflächen ausbildet, die einen Abstand voneinander aufweisen, der etwa einem Abstand der Innenflächen der Grundträger-Haltewände voneinander entspricht,
- der Befestigungsfuß auf seinen im befestigen Zustand den Innenflächen der Haltewände zugewandten Außenflächen jeweils eine an die Aufnahmenut der Grundträger-Haltewände angepasste Feder aufweist,
- die Aufnahmenuten und/oder die Federn derart ausgeführt und angeordnet sind, dass der Befestigungsfuß im eingeführten Zustand der Federn in den Aufnahmenuten geneigt gegenüber einer dem Untergrund zugewandten Unterseite der Grundplatte in der Bügelträgeraufnahme gehalten ist.

Wesentlich ist, dass die Anordnung und Ausrichtung der Federn und der Aufnahmenuten eine Schrägstellung des Befestigungsfußes gegenüber der Vertikalen bzw. Lotrechten bewirken. Dadurch ergibt sich je nach Ausrichtung des Bügelträgers vor dem Einführen in die Bügelträgeraufnahme eine unterschiedliche Höhe des Haltearms gegenüber der Grundplatte oder des Untergrunds.

Erfindungsgemäß ist der Befestigungsfuß im eingeführten Zustand der Federn in den Aufnahmenuten unter einem Winkel zwischen 91° und 98°, vorzugsweise 92° und 94° geneigt gegenüber der dem Untergrund zugewandten Unterseite der Grundplatte in der Bügelträgeraufnahme gehalten. Die Unterseite der Grundplatte liegt im bestimmungsgemäß installierten Zustand auf dem Untergrund auf, so dass sich die genannte Neigung des Befestigungsfußes analog auch zum Untergrund ergibt. Die Neigung bezieht sich dabei auf eine Achse, die im nicht eingesetzten Zustand des Befestigungsfußes, wenn dieser mit seiner Unterseite auf einem Untergrund angeordnet ist, vertikal verläuft.

Erfindungsgemäß sind beide Grundträger-Haltewände in die gleiche Richtung geneigt zur Grundplatte ausgebildet. Die Aufnahmenuten sind im Querschnitt rechtwinklig zu den Innenflächen der Grundträger-Haltewände in diese eingebracht. Die Neigung wird also durch die Neigung der Grundträger-Haltewände bestimmt.

Der Befestigungsfuß kann erfindungsgemäß in einer ersten Ausrichtung und in einer um 180° dazu versetzten zweiten Ausrichtung in die Bügelträgeraufnahme eingeführt werden.

Der Grad der Schrägstellung des Befestigungsfußes in der Bügelträgeraufnahme bestimmt den Höhenunterschied des Haltearms je nach Ausrichtung bzw. im Vergleich zu einer lotrechten Ausrichtung des Befestigungsfußes. Der Haltearm des Bügelträgers erstreckt sich dabei seitlich vom Befestigungsfuß weg und weist einen Horizontalabschnitt auf, der in einer ersten Ausrichtung des Befestigungsfußes in der Bügelträgeraufnahme bei den genannten Neigungswinkeln des Befestigungsfußes einen Winkel von 2° bis 8°, vorzugsweise von 4° bis 6° und in einer zweiten, um 180° zur ersten Ausrichtung verschwenkt ausgerichteten Ausrichtung von 8° bis 15°, vorzugsweise von 10° bis 12° mit der Grundplatte einschließt. Diese Winkel ergeben sich, weil der Haltearm auch im nicht eingesetzten Zustand des Bügelträger nicht exakt horizontal, sondern schräg nach ausgerichtete ist. Die letztendliche Neigung des eingesetzten Bügelträgers ist insofern auch von dem Winkel abhängig, den der Horizontalabschnitt und der im Wesentlichen vertikal ausgerichtete Befestigungsfuß einschließen.

Bei der Montage auf dem Untergrund wird zunächst der Grundträger mit dem Untergrund, beispielsweise einem Dach verbunden, in einem nächsten Schritt wird der Bügelträger in die Bügelträgeraufnahme eingeschoben. Die seitlich angeordneten Federn werden dabei in die Aufnahmenuten der Grundträger-Haltewände eingebracht, wodurch der Bügelträger in vertikaler Richtung gehalten ist. Der Bügelträger wird über eine zusätzliche Schraube am Grundträger befestigt.

Wesentlich ist, dass bei der Montage, also vor dem Einschieben des Bügelträgers, zwischen der ersten und der zweiten Ausrichtung gewählt werden kann, wodurch sich ein deutlicher Unterschied in Bezug auf den Abstand des Haltearms zum Untergrund bzw. zur Grundplatte ergibt. Somit kann der Winkel des Bügelträgers an den Dacheindeckungstyp passend eingestellt werden. Zusätzlich kann über die zuvorige Ausrichtung des Grundträgers vor dessen Montage ebenfalls Einfluss darauf genommen werden, in welcher Richtung der Bügelträger einen größeren und in welcher Richtung einen geringeren Abstand zur Grundplatte und damit zum Untergrund aufweisen soll. Letztendlich ergeben sich dadurch vier verschiedene Positionen des Bügelträgers in Bezug auf den Untergrund. Hierdurch wird eine schnelle und einfache Variabilität für die Montage vor Ort geschaffen.

Der Befestigungsfuß kann v-förmig ausgeführt sein, wobei die beiden Seiten des V an ihrem Treffpunkt in den Haltearm übergehen. An den freien Endbereichen der beiden Seiten des V sind seitlich die Federn angeordnet. Die Endbereiche der beiden Seiten des v-förmige Befestigungsfuß können von einer beiden Seiten in die Bügelträgeraufnahme eingeschoben werden.

In einer vorteilhaften Ausführungsvariante ist der Befestigungsfuß im Wesentlichen quaderförmig als Befestigungsblock ausgeführt, weist also einen etwa rechteckigen Querschnitt auf. Bezogen auf den Querschnitt befinden sich am oberen und unteren, dem Grundträger zugewandten Ende zwischen den vertikalen Bügelträger-Haltewänden zwei vertikal angeordnete Haltewände verbindende Horizontalplatten. In einer besonders bevorzugten Ausführungsvariante bildet die untere Horizontalplatte auch die Federn aus, die seitlich gegenüber den Bügelträger-Haltewände vorstehen.

In diesem Ausführungsbeispiel geht die obere Horizontalplatte in den Haltearm über. Zusammen mit der unteren Horizontalplatte und den beiden Bügelträger-Haltewänden ergibt sich somit der Hohlkörper. In einer alternativen Ausführungsvariante kann der Befestigungsfuß auch aus einem Vollmaterial gefertigt sein, also nicht als Hohlkörper.

Ein Vorteil besteht darin, dass die Biegesteifigkeit eines Blocks (geschlossen oder als Hohlkörper), deutlich höher ist, als bei den Systemen nach dem Stand der Technik, insbesondere als bei Systemen mit zwei nach oben offenen einzelnen Aufnahmenuten für die freien Enden von zwei Armen. Die erfindungsgemäße Lösung ermöglicht somit höhere Traglasten, was erhebliche Vorteile für den Kunden mit sich bringt.

Ein weiterer Vorteil eines Befestigungsblocks besteht darin, dass dieser bzw. der Bügelträger keine freien Enden aufweist, die beispielsweise beim Transport oder der Montage beschädigt oder sogar abbrechen können. Durch die Ausbildung des Befestigungsfußes wird ein ausgesprochen robustes und nahezu unzerstörbares Befestigungselement geschaffen.

Auch ist der zwischen den Grundträger-Haltewänden ausgebildete Freiraum deutlich größer als die im Stand der Technik beschriebenen Nuten zur Aufnahme freier Arme. Der Freiraum kann zwar ebenfalls verschmutzt werden, die Reinigung ist aber schnell und einfach, beispielsweise mit einem Besen möglich. Hinzu kommt, dass sich der Freiraum bzw. die Bügelträgeraufnahme aufgrund des großen Querschnitts nicht so schnell mit Schmutz zusetzt.

Um eine Sicherung des Bügelträgers insbesondere in vertikaler Richtung zu bewirken, kann vorzugsweise eine Klemmsicherung vorgesehen sein. Diese ist in einer besonders einfachen Ausführungsvariante durch eine Schraube gebildet, die durch den Befestigungsfuß im verbundenen Zustand des Bügelträgers mit dem Grundträger von oben in den Befestigungsfuß eingeschraubt werden kann. Zu diesem Zweck weist die Durchgangsöffnung ein Gewinde auf. Die Schraube stützt sich mit ihrem freien Ende gegen die Grundplatte des Grundträgers ab und bewirkt dadurch ein Verklemmen der Federn in den Aufnahmenuten des Grundträgers in vertikaler Richtung.

Auch der Grundträger selbst weist eine sehr einfache, aber widerstandsfähige Konstruktion auf. Er ist im Wesentlichen durch eine Grundplatte gebildet, von der sich die beiden Grundträger-Haltewände vertikal nach oben erstrecken. Die Grundplatte kann geeignete Elemente zur Befestigung an einer Unterkonstruktion aufweisen, beispielsweise Öffnungen zur Aufnahme von Schrauben. Der Grundträger kann in Abhängigkeit regionaler oder nationaler Bestimmungen oder beispielsweise auch aufgrund von individuellen Gegebenheiten unterschiedlicher Dachformen oder -typen unterschiedlich ausgeführt sein, um eine optimale Befestigung zu gewährleisten.

In einer besonders vorteilhaften Ausführungsvariante weist die dem Untergrund zugewandte Auflagefläche des Grundträgers eine Struktur auf, die den Reibungskoeffizient erhöht, sie ist beispielsweise aufgeraut. Alternativ oder zusätzlich können auch vorstehende Dorne vorgesehen sein, die sich in den Untergrund, insbesondere in eine Dachkonstruktion aus Holz, eindrücken. Solche Dornen oder Riffel behindern auch wirkungsvoll ein Verdrehen auf dem Sparren während der Montage und auch im montierten Zustand.

Die Aufnahmenuten in den Grundträger-Haltewänden erstrecken sich im Wesentlichen parallel zur Haupterstreckungsebene der Grundplatte des Grundträgers und sind nicht nach oben, sondern zur Seite offen ausgebildet. Die seitliche Ausrichtung verhindert wirkungsvoll ein Verschmutzen der Aufnahmenuten. In einer besonders vorteilhaften Ausführungsvariante weisen die Grundträger-Haltewände mehrere sich parallel erstreckende Aufnahmenuten auf, in die die von dem Befestigungsfuß des Bügelträgers abstehenden Federn eingebracht werden können. Aufgrund der mehreren Aufnahmenuten wird eine Höhenverstellbarkeit des Bügelträgers relativ zum Grundträger und insbesondere zum Dach, an dem der Grundträger befestigt ist, erzielt. Dadurch ist sichergestellt, dass die Dacheindeckung von dem Bügelträger umgriffen werden kann. Auch lässt sich das Solarmodulbefestigungssystem somit vielseitig, insbesondere an verschiedenen Arten von Dachkonstruktionen und Dacheindeckungen einsetzen.

Die Erfindung wird anhand der nachfolgenden Figuren näher erläutert. Diese stellen lediglich ein bevorzugtes Ausführungsbeispiel dar und sollen nicht einschränkend zu verstehen sein. Die Abmessungen sind dabei nicht maßstäblich, Dimensionen und Abmessungen können auch geändert abweichen. Es zeigen:
- Fig. 1:: ein Solarmodulbefestigungssystems in zusammengesetzten Zustand in Seitenansicht, mit Haltearm in einer ersten Ausrichtung
- Fig. 2:: ein Solarmodulbefestigungssystems in zusammengesetzten Zustand in Seitenansicht, mit Haltearm in einer zweiten Ausrichtung
- Fig. 3:: das Solarmodulbefestigungssystem aus Figur 1 und Figur 2 von oben,
- Fig. 4:: das Solarmodulbefestigungssystems aus Figur 1 und Figur 2 in perspektivischer Darstellung,
- Fig. 5:: das Solarmodulbefestigungssystems aus Figur 1 und Figur 2 in Schnittdarstellung gemäß Schnittlinie A -A aus Fig. 4,
- Fig. 6:: das Solarmodulbefestigungssystems aus Figur 1 und Figur 2 auf einer ersten Dachform,
- Fig. 7:: das Solarmodulbefestigungssystems aus Figur 1 und Figur 2 auf einer zweiten Dachform,

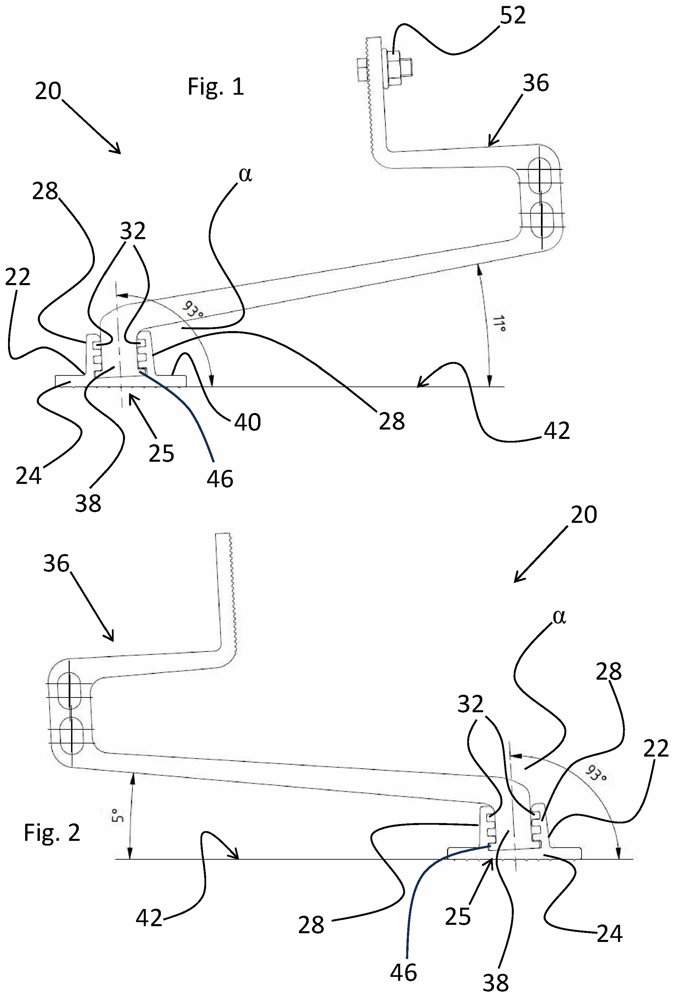

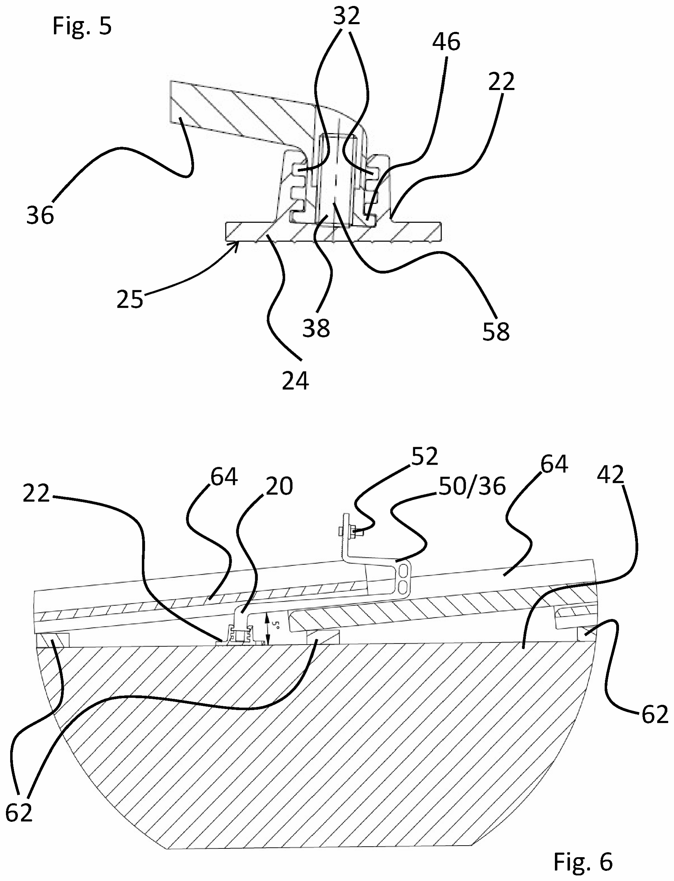

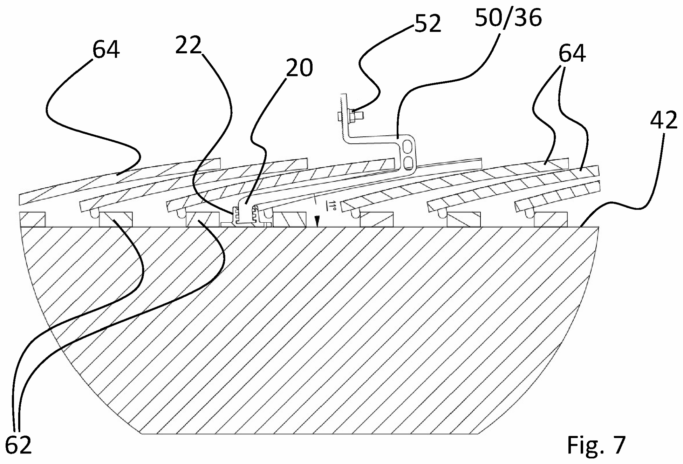

Die Figuren 1 bis 7 zeigen eine bevorzugte Ausführungsvariante eines Solarmodulbefestigungssystems 20. Die Figuren 1 bis 5 zeigen nur das Solarmodulbefestigungssystem 20 im zusammengesetzten Zustand, die Figuren 6 und 7 das Solarmodulbefestigungssystem 20 im montierten Zustand. Dieses weist im Wesentlichen einen Grundträger 22 und einen damit verbindbaren Haltearm 50 auf. De Grundträger 22 weist eine Grundplatte 24 auf, die im montierten Zustand mit einer Unterseite 25 auf einem Untergrund 42 aufliegt und an diesem befestigt ist. Zur Befestigung dienen Löcher 26, durch die Befestigungsmittel, insbesondere Schrauben, hindurchgeführt werden können.

Von der Grundplatte 24 erstrecken sich parallel zueinander zwei Grundträger-Haltewände 28 vertikal nach oben. Die beiden Grundträger-Haltewände 28 schließen zur Grundplatte 24 etwa einen rechten Winkel ein. In den einander zugewandten Innenflächen der Grundträger-Haltewände 28 sind im gezeigten Ausführungsbeispiel jeweils drei übereinander angeordnete Aufnahmenuten 32 vorgesehen. Die Aufnahmenuten 32 erstrecken sich parallel zu einer Haupterstreckungsebene der Grundplatte 24, also im Wesentlichen in horizontaler Richtung. Die Grundplatte 24 und die beiden Grundträger-Haltewände 28 bilden gemeinsam eine Bügelträgeraufnahme 34 aus. Die Bügelträgeraufnahme 34 ist also durch einen U-förmigen Freiraum gebildet, der sich zwischen den Grundträger-Haltewänden 28 ausbildet. Dieser Freiraum ermöglicht es, einen Befestigungsfuß 38 eines Bügelträgers 36 aufzunehmen.

Der Bügelträger 36 weist einen Bügelträgerfuß bzw. Befestigungsfuß 38 mit einem daran angeformten Haltearm 50 auf, der im gezeigten Ausführungsbeispiel dreifach gekröpft ausgeführt ist und an seinem freien Ende ein Befestigungselement 52 zur Befestigung einer Schiene aufweist, auf die ein nicht gezeigtes Solarmodul montiert werden kann. Im gezeigten Ausführungsbeispiel weist das Befestigungselement 52 eine geriffelte, strukturierte Oberfläche auf, weiterhin ist ein Langloch 53 zur Befestigung einer nicht gezeigten Modultragschiene in der Fläche des Befestigungselements 52 vorgesehen. Für die Befestigung dient als Befestigungselement 52 eine Befestigungsschraube mit korrespondierender Schraubenmutter.

Der Haltearm 50 weist einen Horizontalabschnitt 60 auf, der sich vom Befestigungsfuß 38 im Wesentlichen horizontal parallel zum Untergrund 42 erstreckt. Der Begriff horizontal ist dabei lediglich als grobe Ausrichtung zu verstehen, im gezeigten Ausführungsbeispiel verläuft auch dieser Abschnitt nicht exakt horizontal zur Oberfläche 40 der Grundplatte 24, sondern schließt mit einer durch den Befestigungsfuß 38 verlaufende Vertikalachse (gestrichelte Linie) nach oben einen Winkel von etwa 83° ein.

Die Befestigung der Modultragschiene an das Befestigungselement 52 erfolgt seitlich, was eine erleichterte Montage zur Konsequenz hat. Weiterhin ist durch das Langloch 53, dass sich orthogonal zu den Aufnahmenuten 32 erstreckt, eine weitere Höhenverstellbarkeit gegeben, wodurch die Position der Modultragschiene zusätzlich höhenmäßig anpassbar ist.

Außenflächen des Befestigungsfußes 38 weisen dazu einen Abstand voneinander auf, der einem Abstand der Innenflächen der Grundträger-Haltewände 28 zueinander entspricht, abzüglich eines minimalen Abstandes, der das Ineinanderschieben ermöglicht und Fertigungstoleranzen berücksichtigt

Von den Außenflächen des Befestigungsfußes 38 stehen jeweils Federn 46 vor, die derart ausgeführt und angeordnet sind, dass sie in die Aufnahmenuten 32 der Innenflächen der Grundträger-Haltewände 28 einführbar sind. Figur 1 zeigt beispielhaft Federn 46, die in der untersten, an die Grundplatte 24 angrenzenden Aufnahmenuten eingeführt sind. Alternativ können die Federn 46 auch in darüber angeordnete Aufnahmenuten 32 eingeführt werden. Die übereinander angeordneten Aufnahmenuten 32 ermöglichen die Aufnahme eines Bügelträgers 36 in unterschiedlichen Höhen bzw. mit unterschiedlichem Abstand zur Grundplatte 24. Dies ermöglicht ein flexibleres und an örtliche Begebenheiten angepasstes Montieren von Solarmodulen beispielsweise auf einem Dach. Insbesondere kann die Montage dadurch an verschiedene Dachziegel mit variierenden Formen und Abmessungen angepasst werden, was sich insbesondere aus den Figuren 6 und 7 ergibt.

Gut erkennbar sind die zur Grundplatte 24 schräg verlaufenden Aufnahmenuten 32, die ein seitliches Schrägstellen des Befestigungsfußes 38 und damit des Bügelträgers 36 bewirken. Im gezeigten Ausführungsbeispiel schließen die durch den Befestigungsfuß 38 verlaufende Vertikalachse (gestrichelte Linie) mit einer Unterseite 25 der Grundplatte 24 bzw. einem Untergrund 40 einen Winkel α von 93° bzw. in der gegenüberliegenden Richtung von 87° ein.

In Figur 1 ist der Bügelträger 36 derart in die Bügelträgeraufnahme 34 eingeführt, dass sich der Horizontalabschnitt 60 des Haltearms 50 und die Unterseite 42 der Grundplatte 24 einen Winkel von 11° einschließen. In Figur 2 ist der Bügelträger 36 um 180° verdreht zur Ausrichtung in Fig.1 angeordnet, wodurch der Horizontalabschnitt 60 des Haltearms 50 und die Oberfläche 40 der Grundplatte 24 einen Winkel von nur 5° einschließen. Die gezeigten Winkel zwischen dem Horizontalabschnitt 60 und der Oberfläche 40 der Grundplatte 24 sind nur beispielhaft zu verstehen, in Abhängigkeit der konstruktionsbedingten Schrägstellung des Horizontalabschnitts 60 zur Vertikalachse des Befestigungsfußes 38 können selbstverständlich auch andere Winkel vorgesehen werden.

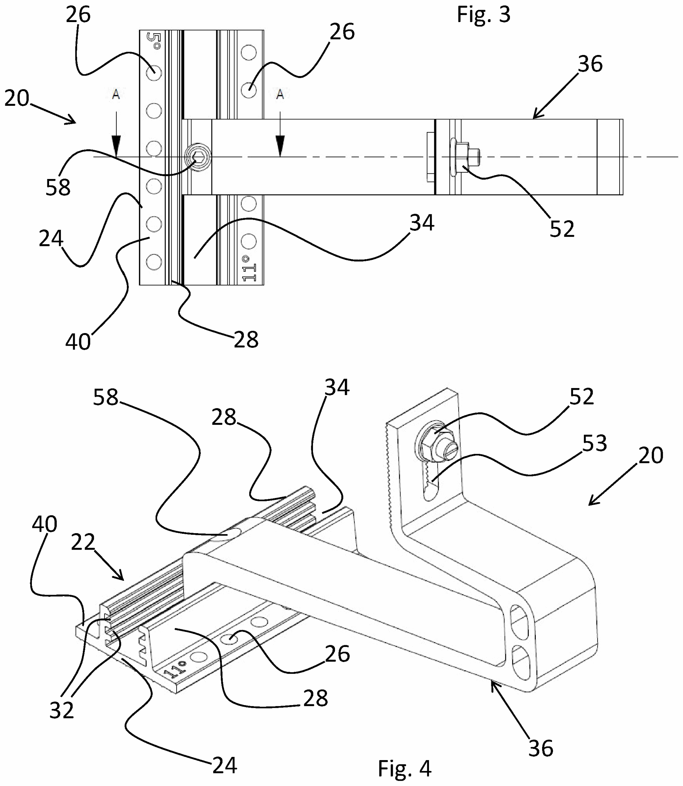

Insbesondere die Figuren 3 und 5 verdeutlichen weiterhin eine Klemmsicherung, die durch eine nicht gezeigte Schraube gebildet ist, die sich durch im Befestigungsfuß 38 angeordnete Durchgangsöffnung 58 hindurchgeführt werden kann. Die Durchgangsöffnung 58 weist ein mit der Schraube korrespondierendes Gewinde auf, sodass diese mit ihrem freien Ende gegen die Grundplatte 24 geschraubt werden kann und sich dort abstützt. Durch die Schraube verklemmen sich die Federn 46 in vertikaler Richtung in den Aufnahmenuten 32.

Die Figuren 6 und 7 verdeutlichen den positiven Effekt, der sich durch die unterschiedlichen Winkeleinstellungen des Bügelträgers 36 ergibt. In vereinfachten Prinzipdarstellungen sind in beiden Figuren Solarmodulbefestigungssysteme 20 auf unterschiedlichen Dächern montiert gezeigt. Figur 6 zeigt Variante für Flachziegel mit hoher Überdeckung und dadurch höherem Neigungswinkel des Haltearms 50, wie sie beispielsweise oft in Großbritannien zum Einsatz kommt. Figur 7 zeigt eine Variante für klassische Dachpfannen mit niedrigerer Überdeckung und dadurch geringerem Neigungswinkel des Haltearms 50.

Beide Dächer weisen Dachlatten 62 auf, an denen Dachziegel 64 befestigt sind. Die Dachziegel 64 weisen im Querschnitt einen unterschiedlichen Verlauf auf, wodurch sich unterschiedliche Ausrichtungsanforderungen und Abstände von nicht gezeigten Solarmodulen zu den Untergründen 42 der Dächer ergeben. Figur 6 zeigt die Anordnung des Solarmodulbefestigungssystems 20 derart, dass der Bügelträger 36 bzw. der Haltearm 50 flach zum Untergrund 42 des Daches ausgerichtet ist (etwa 5°). In der Anordnungsvariante gemäß Figur 7 ist der Bügelträger 36 bzw. der Haltearm 50 dagegen steiler gegenüber dem Untergrund 42 ausgerichtet (etwa 11°). Dies ergibt sich daraus, dass der Bügel an 36 zwar in die gleiche Richtung, der Grundträger 22 dagegen um 180° gedreht ausgerichtet ist.

Das gezeigte Ausführungsbeispiel weist viel Vorteile auf, jedoch ist die Erfindung nicht auf dieses beschränkt. Insbesondere können auch weitere nicht gezeigte technische Merkmale aus der Beschreibung und den Ansprüchen in beliebiger Weise miteinander und mit den gezeigten Varianten kombiniert werden. Der Befestigungsfuß 38 kann beispielsweise in einer nicht gezeigten alternativen Ausführung auch als Hohlkörper mit Durchgangsöffnung ausgeführt sein. In Seitenansicht gesehen weist er ein Fenster auf, welches durch zwei sich im Wesentlichen vertikal erstreckende Bügelträger-Haltewände, eine obere und eine untere Horizontalplatte begrenzt ist.

### Bezugszeichen

- 20: Solarmodulbefestigungssystem
- 22: Grundträger
- 24: Grundplatte
- 25: Unterseite
- 26: Löcher
- 28: Grundträger-Haltewände
- 32: Aufnahmenuten
- 34: Bügelträgeraufnahme
- 36: Bügelträger
- 38: Befestigungsfuß
- 40: Oberfläche Grundplatte
- 42: Untergrund
- 46: Federn
- 50: Haltearm
- 52: Befestigungselement
- 53: Langloch
- 58: Durchgangsöffnungen
- 60: Horizontalabschnitt
- 62: Dachlatten
- 64: Dachziegel

## Patentansprüche

1. Solarmodulbefestigungssystem (20), aufweisend
- einen auf einem Untergrund (42), insbesondere an einem Dach befestigbaren Grundträger (22) mit einer Grundplatte (24), auf der zumindest zwei einander gegenüberliegende und sich parallel zueinander erstreckende Grundträger-Haltewände (28) angeordnet sind, wobei die Grundträger-Haltewände (28) in ihren aufeinander zu gerichteten Innenflächen jeweils zumindest eine Aufnahmenut (32) aufweisen, die einander gegenüberliegend und parallel verlaufend angeordnet sind und gemeinsam mit der Grundplatte (24) eine Bügelträgeraufnahme (34) ausbilden,
- einen Bügelträger (36) mit einem Haltearm (50), der endseitig in einen Befestigungsbereich übergeht, der mit dem Grundträger (22) lösbar verbindbar ist,
wobei
- der Bereich zwischen den Grundträger-Haltewände (28) einen Freiraum ausbildet,
- der Befestigungsbereich des Bügelträgers (36) einen Befestigungsfuß (38) aufweist, der im befestigen Zustand den Innenflächen der Grundträger-Haltewände (28) zugewandte Außenflächen ausbildet, die einen Abstand voneinander aufweisen, der etwa einem Abstand der Innenflächen der Grundträger-Haltewände (28) voneinander entspricht,
- der Befestigungsfuß (38) auf seinen im befestigen Zustand den Innenflächen der Haltewände (40) zugewandten Außenflächen jeweils eine an die Aufnahmenut (32) der Grundträger-Haltewände (28) angepasste Feder (46) aufweist,
- beide Grundträger-Haltewände (28) in die gleiche Richtung geneigt zur Grundplatte (24) ausgebildet sind, und die Aufnahmenuten (32) im Querschnitt rechtwinklig zu den Innenflächen der Grundträger-Haltewände (28) in diese eingebracht sind,
- die Aufnahmenuten (32) und/oder die Federn (46) derart ausgeführt und angeordnet sind, dass im eingeführten Zustand der Federn (46) in den Aufnahmenuten (32) der sich zwischen den Grundträger-Haltewänden (28) angeordnete Befestigungsfuß (38) unter einem Winkel zwischen 91° und 98° geneigt gegenüber einer dem Untergrund (42) zugewandten Unterseite (25) der Grundplatte (24) in der Bügelträgeraufnahme (34) gehalten ist, wobei sich die Neigung auf eine Achse bezieht, die im nicht eingesetzten Zustand des Befestigungsfußes (38), wenn dieser mit seiner Unterseite (25) auf einem Untergrund angeordnet ist, vertikal zum Untergrund verläuft,
- der Befestigungsfuß (38) in einer ersten Ausrichtung und in einer um 180° dazu versetzten zweiten Ausrichtung in die Bügelträgeraufnahme (34) einführbar ist,
- eine Klemmsicherung durch eine im Befestigungsfuß (38) angeordnete Durchgangsöffnung (58) hindurchführbare Schraube gebildet ist, wobei die Durchgangsöffnung (58) ein mit der Schraube korrespondierendes Gewinde aufweist, sodass die Schraube (58) mit ihrem freien Ende gegen die Grundplatte (24) geschraubt werden kann und sich dort abstützt, wodurch sich die Federn (46) in vertikaler Richtung in den Aufnahmenuten (32) verklemmen.

2. Solarmodulbefestigungssystem (20) nach Anspruch 1, **dadurch gekennzeichnet, dass** die die Aufnahmenuten (32) und/oder die Federn (46) derart ausgeführt und angeordnet sind, dass der Befestigungsfuß (38) im eingeführten Zustand der Federn (46) in den Aufnahmenuten (32) unter einem Winkel α zwischen 91° und 98°, vorzugsweise 92° und 94° geneigt gegenüber der dem Untergrund (42) zugewandten Unterseite (25) der Grundplatte (24) in der Bügelträgeraufnahme (34)) gehalten ist.

3. Solarmodulbefestigungssystem (20) nach Anspruch 1 oder Anspruch 2, **dadurch gekennzeichnet, dass** sich der Haltearm (50) des Bügelträgers (36) seitlich vom Befestigungsfuß (38) weg erstreckt und einen Horizontalabschnitt (60) aufweist, der in einer ersten Ausrichtung des Befestigungsfußes (38) in der Bügelträgeraufnahme (34) einen Winkel von 2° bis 8°, vorzugsweise von 4° bis 6° und in einer zweiten, um 180° zur ersten Ausrichtung verschwenkt ausgerichteten Ausrichtung von 8° bis 15°, vorzugsweise von 10° bis 12° mit der Unterseite (25) der Grundplatte (24) einschließt.

4. Solarmodulbefestigungssystem (20) nach einem der Ansprüche 1 bis 3 **dadurch gekennzeichnet, dass** die Aufnahmenuten (32) und die korrespondierenden Federn (46) im Querschnitt rechtwinklig ausgeführt sind.

5. Solarmodulbefestigungssystem (20) nach einem der Ansprüche 1 bis 4 **dadurch gekennzeichnet, dass** der Befestigungsfuß (38) von beiden gegenüberliegenden Seiten in die Aufnahmenuten (32) der Bügelträgeraufnahme (34) einführbar ist.

6. Solarmodulbefestigungssystem (20) nach einem der Ansprüche 1 bis 5, **dadurch gekennzeichnet, dass** die Grundträger-Haltewände (28) mehrere parallel verlaufende Aufnahmenuten aufweisen, die unterschiedliche Abstände zur Ebene der Grundplatte (24) aufweisen.

7. Solarmodulbefestigungssystem (20) nach einem der Ansprüche 1 bis 6, **dadurch gekennzeichnet, dass** die Federn (46) am im befestigten Zustand des Bügelträgers (36) der Grundplatte (24) zugewandten Ende des Befestigungsfußes (38) angeordnet sind.

8. Montageverfahren zur Anordnung eines Bügelträgers (36) in einem Grundträger (22) eines Solarmodulbefestigungssystems (20) (20) nach einem der Ansprüche 1 bis 7, **gekennzeichnet durch** die Verfahrensschritte,
- zuvorige Ausrichtung des Grundträgers (22) vor dessen Montage,
- Montieren des Grundträgers (22) auf dem Untergrund (42),
- Auswählen einer Ausrichtung des Bügelträgers (36) in Bezug auf eine unterschiedliche Neigung des Befestigungsfußes (38) in einer ersten Ausrichtung in einer zweiten, um 180° zur ersten Ausrichtung verschwenkt ausgerichteten Ausrichtung,
- Einschieben des Befestigungsfußes (38) des Bügelträgers (36) in der ausgewählten Ausrichtung zwischen die Grundträger-Haltewänden (28) durch Einschieben der Federn (46) in die Aufnahmenuten (32),
- Befestigung des Bügelträgers (36) am Grundträger (22) über eine Schraube (58).

## Claims

1. Solar module fastening system (20) having
- a base support (22) which can be fastened to a base (42), in particular to a roof, with a base plate (24) on which at least two base support retaining walls (28) are arranged, positioned opposite and extending parallel to each other, wherein the base support retaining walls (28) each have at least one receiving groove (32) which face each other and extend parallel to one another in the inner surfaces thereof that are arranged facing each other, forming a bracket support receptacle (34) together with the base plate (24),
- a bracket support (36) with a holding arm (50), the end of which transitions into a fastening region that can be detachably connected to the base support (22),
wherein
- the region between the base support retaining walls (28) forms a free space,
- the fastening region of the bracket support (36) has a fastening foot (38) which, in the fastened state, forms outer surfaces that face the inner surfaces of the base support retaining walls (28) and are spaced apart from each other by a distance that approximately corresponds to a distance between the inner surfaces of the base support retaining walls (28),
- the fastening foot (38) has a spring (46) adapted to each receiving groove (32) of the base support retaining walls (28) on each of its outer surfaces facing the inner surfaces of the retaining walls (40) in the fastened state,
- both base support retaining walls (28) are designed to be inclined in the same direction with respect to the base plate (24), and the receiving grooves (32) in the cross-section are created in them at right angles to the inner surfaces of the base support retaining walls (28),
- the receiving grooves (32) and/or the springs (46) are designed and arranged such that with the springs (46) in the inserted state in the receiving grooves (32) the fastening foot (38) arranged between the base support retaining walls (28) is held in the bracket support receptacle (34) at an angle between 91° and 98° relative to an underside (25) of the base plate (24) facing the substrate (42), wherein the inclination is relative to an axis that extends vertically to the base with the fastening foot (38) in the uninserted state, when the underside (25) of the fastening foot is arranged on a base,
- the fastening foot (38) can be inserted into the bracket support receptacle (34) in a first orientation and in a second orientation offset by 180° with respect to the first orientation,
- a clamping securing arrangement is formed by a screw that can be passed through a through hole (58) arranged in the fastening foot (38), wherein the through hole (58) has a thread that corresponds to the screw, so that the free end of the screw (58) can be screwed towards the base plate (24) and is braced against it, with the result that the springs (46) are clamped in the receiving grooves (32) in the vertical direction.

2. Solar module fastening system (20) according to Claim 1, **characterized in that** the receiving grooves (32) and/or the springs (46) are designed and arranged such that with the springs (46) in the inserted state in the receiving grooves (32), the fastening foot (38) is held in the bracket support receptacle (34) at an angle a between 91° and 98°, preferably 92° and 94°, inclined relative to the underside (25) of the base plate (24) facing the substrate (42).

3. Solar module fastening system (20) according to Claim 1 or Claim 2, **characterized in that** the holding arm (50) of the bracket support (36) extends laterally away from the fastening foot (38) and has a horizontal section (60) which, in a first orientation of the fastening foot (38) in the bracket support receptacle (34), encloses an angle of 2° to 8°, preferably 4° to 6°, and in a second orientation pivoted by 180° with respect to the first orientation, encloses an angle of 8° to 15°, preferably 10° to 12° with the underside (25) of the base plate (24).

4. Solar module fastening system (20) according to any one of Claims 1 to 3,
**characterized in that** the receiving grooves (32) and the corresponding springs (46) are designed with a right-angled cross section.

5. Solar module fastening system (20) according to any one of Claims 1 to 4,
**characterized in that** the fastening foot (38) can be inserted in the receiving grooves (32) of the bracket support receptacle (34) from both opposite sides.

6. Solar module fastening system (20) according to any one of Claims 1 to 5, **characterized in that** the base support retaining walls (28) have a plurality of parallel receiving grooves which are at different distances from the plane of the base plate (24).

7. Solar module fastening system (20) according to any one of Claims 1 to 6, **characterized in that** the springs (46) are arranged on the end of the fastening foot (38) that is facing the base plate (24) in the fastened state of the bracket support (36).

8. Installation method for arranging a bracket support (36) in a base support (22) of a solar module fastening system (20) according to any one of Claims 1 to 7, **characterized by** the method steps of:
- prior orientation of the base support (22) before installation thereof,
- installing the base support (22) on the base (42),
- selecting an orientation of the bracket support (36) in respect of a different inclination of the fastening foot (38) in a first orientation, in a second orientation pivoted through 180° relative to the first orientation,
- inserting the fastening foot (38) of the bracket support (36) in the selected orientation between the base support retaining walls (28) by pushing the springs (46) into the receiving grooves (32),
- fastening the bracket support (36) to the base support (22) via a screw (58).

## Revendications

1. Système de fixation de module solaire (20), comportant
- un support de base (22), pouvant être fixé sur un fond (42), en particulier sur un toit, avec une plaque de base (24) sur laquelle sont disposées au moins deux parois de maintien de support de base (28) opposées l'une à l'autre et s'étendant parallèlement l'une par rapport à l'autre,
sachant que les parois de maintien de support de base (28) comportent dans leurs surfaces intérieures orientées l'une sur l'autre respectivement au moins une rainure de réception (32), qui sont disposées opposées l'une à l'autre et passant parallèlement et constituent en commun avec la plaque de base (24) un logement d'étrier de support (34),
- un étrier de support (36) avec un bras de maintien (50), qui passe en extrémité dans une zone de fixation, qui peut être relié de façon amovible au support de base (22),
sachant que
- la zone entre les parois de maintien de support de base (28) constitue un espace libre,
- la zone de fixation de l'étrier de support (36) comporte un pied de fixation (38), qui constitue à l'état fixé des surfaces extérieures tournées vers les surfaces intérieures des parois de maintien de support de base (28), qui comportent une distance les unes des autres, qui correspond à peu près à une distance des surfaces intérieures des parois de maintien de support de base (28),
- le pied de fixation (38) comporte respectivement sur ses surfaces extérieures tournées à l'état fixé vers les surfaces intérieures de parois de maintien (40), un ressort (46) adapté à la rainure de réception (32) des parois de maintien de support de base (28),
- les deux parois de maintien de support de base (28) sont constituées dans la même direction inclinées vers la plaque de base (24) et les rainures de réception (32) sont aménagées dans celle-ci en section à angle droit par rapport aux surfaces intérieures des parois de maintien de support de base (28),
- les rainures de réception (32) et/ou les ressorts (46) sont exécutés et disposés de telle manière qu'à l'état introduit des ressorts (46) dans les rainures de réception (32), le pied de fixation (38) disposé entre les parois de maintien de support de base (28) est maintenu sous un angle se situant entre 91° et 98° incliné par rapport à une face inférieure (25) de la plaque de base (24), tournée vers le fond (42) dans le logement d'étrier de support (34), sachant que l'inclinaison se réfère à un axe, qui à un état non inséré du pied de fixation (38), lorsque celui-ci est disposé avec sa face inférieure (25) sur un fond, passe verticalement par rapport au fond,
- le pied de fixation (38) peut être introduit dans le logement d'étrier de support (34) dans une première orientation et une deuxième orientation décalée à cet effet de 180°,
- une sécurisation de serrage est formée par une vis pouvant traverser une ouverture de passage (58) disposée dans le pied de fixation (38), sachant que l'ouverture de passage (58) comporte un filetage correspondant à la vis de telle sorte que la vis (58) peut être vissée avec son extrémité libre contre la plaque de base (24) et s'y appuyer, les ressorts (46) se bloquant de ce fait en direction verticale dans les rainures de réception (32).

2. Système de fixation de module solaire (20) selon la revendication 1, **caractérisé en ce que** les rainures de réception (32) et/ou les ressorts (46) sont exécutés et disposés de telle manière que le pied de fixation (38) à l'état introduit des ressorts (46) est maintenu dans les rainures de réception (32) sous un angle α se situant entre 91° et 98°, de préférence 92° et 94° incliné par rapport à la face inférieure (25) de la plaque de base (24), tournée vers le fond (42) dans le logement d'étrier de support (34).

3. Système de fixation de module solaire (20) selon la revendication 1 ou la revendication 2, **caractérisé en ce que** le bras de maintien (50) de l'étrier de support (36) s'étend latéralement du pied de fixation (38) et comporte une section horizontale (60), qui forme dans une première orientation du pied de fixation (38) dans le logement de l'étrier de support (34) un angle de 2° à 8°, de préférence de 4° à 6° et dans une deuxième orientation pivotée de 180° par rapport à la première orientation , de 8° à 15°, de préférence de 10° à 12° avec la face inférieure (25) de la plaque de base (24).

4. Système de fixation de module solaire (20) selon l'une quelconque des revendications 1 à 3 **caractérisé en ce que** les rainures de réception (32) et les ressorts (46) correspondants sont exécutés en section à angle droit.

5. Système de fixation de module solaire (20) selon l'une quelconque des revendications 1 à 4, **caractérisé en ce que** le pied de fixation (38) peut être introduit des deux côtés opposés dans les rainures de réception (32) du logement d'étrier de support (34).

6. Système de fixation de module solaire (20) selon l'une quelconque des revendications 1 à 5, **caractérisé en ce que** les parois de maintien de support de base (28) comportent plusieurs rainures de réception passant parallèlement, qui comportent des distances différentes par rapport au plan de la plaque de base (24).

7. Système de fixation de module solaire (20) selon l'une quelconque des revendications 1 à 6, **caractérisé en ce que** les ressorts (46) sont disposés, à l'état fixé de l'étrier de support (36), à l'extrémité du pied de fixation (38), tournée vers la plaque de base (24).

8. Procédé de montage pour la mise en place d'un étrier de support (36) dans un support de base (22) d'un système de fixation de module solaire (20) selon l'une quelconque des revendications 1 à 7, **caractérisé par** les étapes de procédé suivantes :
- orientation préalable du support de base (22) avant le montage de celui-ci,
- montage du support de base (22) sur le fond (42),
- sélection d'une orientation de l'étrier de support (36) par rapport à une inclinaison différente du pied de fixation (38) dans une première orientation dans une deuxième orientation orientée pivotée de 180° par rapport à la première orientation,
- glissement du pied de fixation (38) de l'étrier de support (36) dans l'orientation choisie entre les parois de maintien de support de base (28) en faisant glisser les ressorts (46) dans les rainures de réception (32),
- fixation de l'étrier de support (36) sur le support de base (22) au moyen d'une vis (58).
